(19) Europäisches Patentamt
European Patent Office
Office européen des brevets

(11) **EP 4 501 576 A1**

(12) **EUROPEAN PATENT APPLICATION**
published in accordance with Art. 153(4) EPC

(43) Date of publication:
05.02.2025 Bulletin 2025/06

(21) Application number: 23780726.8

(22) Date of filing: 29.03.2023

(51) International Patent Classification (IPC):
**B29C 43/20** (2006.01) **B29C 70/18** (2006.01)

(52) Cooperative Patent Classification (CPC):
**B29C 43/20; B29C 70/18**

(86) International application number:
**PCT/JP2023/012880**

(87) International publication number:
**WO 2023/190718 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.03.2022 JP 2022057209

(71) Applicant: Mitsui Chemicals, Inc.
Tokyo 104-0028 (JP)

(72) Inventors:
• **MIYATA, Atsushi**
**Tokyo 104-0028 (JP)**
• **MIZUMOTO, Kazuya**
**Chiba 299-0265 (JP)**
• **KIKUCHI, Kazuaki**
**Chiba 299-0265 (JP)**
• **NISHIDA, Atsumi**
**Chiba 299-0265 (JP)**

(74) Representative: **Hoffmann Eitle**
**Patent- und Rechtsanwälte PartmbB**
**Arabellastraße 30**
**81925 München (DE)**

(54) **RANDOM SHEET MANUFACTURING METHOD**

(57) The present invention provides a method for manufacturing a random sheet having a better external appearance. This random sheet manufacturing method comprises: a step for spreading, in a planar manner, thin pieces of a fiber-reinforced resin obtained by impregnating a plurality of reinforcing fibers arranged oriented in one direction with a first thermoplastic resin; a step for adding a powder of a second thermoplastic resin to the thin pieces which have been spread; and a step for heating and pressurizing the thin pieces to which the powder has been added and unifying the thin pieces with each other.

START

SPREAD THIN PIECES — S110

APPLY POWDER — S120

INTEGRATION OF THIN PIECES — S130

END

FIG. 1

EP 4 501 576 A1

## Description

Technical Field

The present invention relates to a method for producing a random sheet.

Background Art

A fiber reinforced resin (hereinafter also simply referred to as "unidirectional (UD) sheet") having a shape of a thin film are known. Such a fiber reinforced resin contains a plurality of reinforcing fibers arranged to be oriented in one direction and a resin composition (matrix resin), with the reinforcing fibers impregnated with the resin composition. The UD sheet is cut into thin pieces, and the thin pieces are spread randomly to have a two-dimensional shape, heated and pressurized, and molded into a sheet, thereby obtaining a random sheet composed of randomly disposed blocks with reinforcing fibers being oriented in one direction in each block (for example, Patent Literature (hereinafter, referred to as PTL) 1). Random sheets have a unique marble-like appearance and are highly moldable (shapeable) by stamp molding, press molding, or the like, thus are expected to be used for a variety of applications.

PTL 1 describes a method for producing a random sheet as follows: the above thin pieces, in which carbon fiber are used as reinforcing fibers, are spread so as to form a flat shape; a transparent thermoplastic resin film is temporarily bonded to the thin pieces by roll forming, and then hot press and cold press are performed. According to PTL 1, the method thereof is capable of obtaining a random sheet with enhanced design because when the molten transparent resin enters between the thin pieces during the hot press, the carbon fibers are dragged and moved, distorting the shape of the thin pieces.

Citation List

Patent Literature

PTL 1
WO2020/009125

Summary of Invention

Technical Problem

PTL 1 teaches that a random sheet with enhanced design can be obtained by performing hot press molding after temporary bonding of a transparent thermoplastic resin film by roll forming. However, the study performed by the present inventors shows that the appearance of the obtained random sheet is far from that of flowing marble-like patterns even when the random sheet is produced by the method of PTL 1.

The present invention was made in view of the problems described above and an object of the present invention is to provide a method for producing a random sheet with improved appearance.

Solution to Problem

An embodiment of the present invention for solving the above problems relates to the method for producing a random sheet as the following items [1] to [6].

[1] A method for producing a random sheet, the method including:

spreading thin pieces of a fiber reinforced resin so as to form a flat shape, wherein in the fiber reinforced resin, a plurality of reinforcing fibers arranged to be oriented in one direction are impregnated with a first thermoplastic resin;
applying powder of a second thermoplastic resin to the thin pieces spread; and
integrating the thin pieces with each other by heating and pressurizing the thin pieces, the thin pieces being subjected to the applying of the powder.

[2] The method according to [1], wherein in the applying the powder, the powder is applied in an amount of 20.0 g/m$^2$ or more.
[3] The method according to [1] or [2], wherein the first thermoplastic resin and the second thermoplastic resin are both polyolefin resins.

[4] The method according to any one of [1] to [3], wherein the first thermoplastic resin and the second thermoplastic resin are both polypropylene.

[5] The method according to any one of [1] to [4], wherein the second thermoplastic resin is polypropylene having a melt flow rate (MFR) of 5.0 g/10 min or more measured at 230°C and a load of 2,160 g in accordance with ASTM D-1238.

[6] The method according to any one of [1] to [5], wherein

the integrating the thin pieces with each other includes, in an order below,

> bumping for removing air from a space between the thin pieces spread and the powder, and
> heating and pressurizing the thin pieces spread and the powder at a temperature equal to or higher than a melting point of the first thermoplastic resin and equal to or higher than a melting point of the second thermoplastic resin to integrate the thin pieces with each other.

Advantageous Effects of Invention

The present invention is capable of providing a method for producing a random sheet with improved appearance.

Brief Description of Drawing

FIG. 1 is a flowchart illustrating a method for producing a random sheet according to an embodiment of the present invention;

FIG. 2 schematically illustrates the configuration of a chopped sheet to be used for producing a random sheet;

FIG. 3 schematically illustrates chopped sheets being spread inside a mold frame in the first step of a method for producing a random sheet according to the embodiment of the present invention;

FIG. 4 schematically illustrates application of thermoplastic resin powder to the chopped sheets spread inside the mold frame, in the second step of the method for producing a random sheet according to the embodiment of the present invention;

FIG. 5 schematically illustrates heating and pressurizing of the chopped sheets, in the second step of the method for producing a random sheet according to the embodiment of the present invention;

FIG. 6 is a flowchart illustrating an integration sub-process of thin pieces in the method for producing a random sheet according to the embodiment of the present invention;

FIG. 7 is captured image data of the appearance of chopped sheets scattered during the production of random sheet 1 in Examples;

FIG. 8 is captured image data of the appearance of random sheet 1 obtained in Examples;

FIG. 9 is captured image data of the appearance of random sheet 9 obtained in Examples; and

FIG. 10 is image data obtained by capturing the image of marble.

Description of Embodiments

Hereinafter, an exemplary embodiment of the present invention will be described.

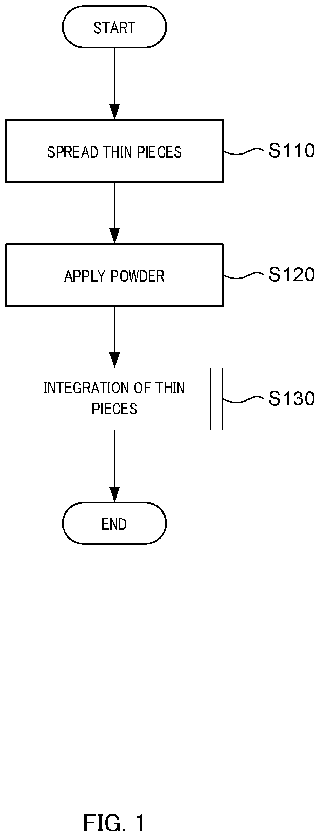

FIG. 1 is a flowchart illustrating a method for producing a random sheet according to an embodiment of the present invention. As illustrated in FIG. 1, the production method relating to the present embodiment includes a step of spreading thin pieces of fiber reinforced resin (step S110), a step of applying powder to the spread thin pieces (step S120), and a step of integrating the thin pieces with each other by heating and pressurizing (step S130).

1. Step of spreading (step S110)

In the first step, thin pieces of fiber reinforced resin are spread in two dimensions.

1-1. Thin piece of fiber reinforced resin

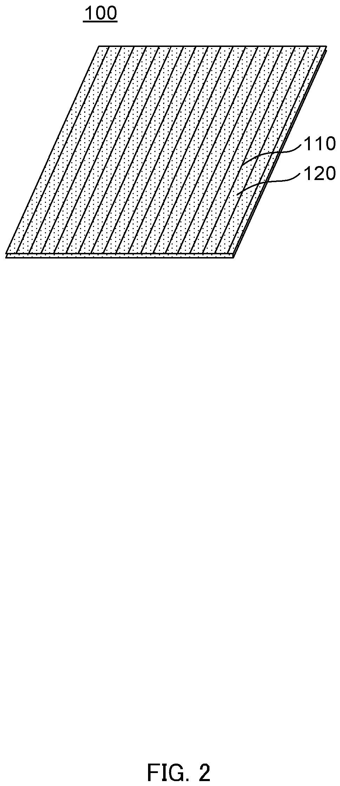

FIG. 2 schematically illustrates an outline of the thin piece of a fiber reinforced resin (hereinafter also simply referred to as a "chopped sheet"). As illustrated in FIG. 2, chopped sheet 100 is a thin piece of a UD sheet in which a plurality of reinforcing fibers 110 arranged to be oriented in one direction are impregnated with matrix resin 120. The chopped sheet can be prepared, for example, by cutting a UD sheet to have a predetermined size.

Any material may be used for reinforcing fibers 110. For example, any one of carbon fibers, glass fibers, aramid fibers, alumina fibers, silicon carbide fibers, boron fibers, metal fibers, and the like may be used as the reinforcing fibers. In particular, carbon fibers and glass fibers are preferred, and carbon fibers are more preferred.

Reinforcing fibers 110 preferably have an average diameter of 1 $\mu$m or more and 20 $\mu$m or less, more preferably of 4 $\mu$m or more and 10 $\mu$m or less, from the viewpoint of satisfactorily increasing the strength improvement effect of the reinforcing fibers.

In addition, reinforcing fibers 110 may be subjected to sizing treatment by using a sizing agent.

The sizing agent is not limited, but a modified polyolefin is preferred, in particular, a modified polyolefin containing a carboxylic acid metal salt is more preferred. The modified polyolefin is, for example, a polyolefin in which a carboxylic acid group, a carboxylic acid anhydride group, or a carboxylic acid ester group is grafted into the polymer chain of an unmodified polyolefin, and a salt is formed between the above functional group and a metal cation. The $\alpha$-olefin constituting such a modified polyolefin may be any $\alpha$-olefin derived from fossil fuels or from biomass raw materials, or a mixture thereof.

Unmodified polyolefin is preferably an ethylene polymer with a content of the constituent unit derived from ethylene of 50 mol% or more, or a propylene polymer with a content of the constituent unit derived from propylene of 50 mol% or more. Examples of the ethylene polymer include ethylene homopolymer and copolymers of ethylene and an $\alpha$-olefin having 3 or more and 10 or less carbon atoms. Examples of the propylene polymer include propylene homopolymer and copolymers of propylene and ethylene or an $\alpha$-olefin having 4 or more and 10 or less carbon atoms. The unmodified polyolefin is preferably propylene homopolymer, ethylene homopolymer, ethylene/propylene copolymer, propylene/1-butene copolymer, or ethylene/propylene/1-butene copolymer. The $\alpha$-olefin constituting such a modified polyolefin may be any $\alpha$-olefin derived from fossil fuels or from biomass raw materials, or a mixture thereof.

The content of reinforcing fibers 110 based on the total mass of chopped sheet 100 is preferably 20 mass% or more and 80 mass% or less, more preferably 30 mass% or more and 75 mass% or less, and even more preferably 35 mass% or more and 70 mass% or less.

The content of reinforcing fibers 110 based on the total volume of chopped sheet 100 is preferably 10 volume% or more and 70 volume% or less, more preferably 15 volume% or more and 60 volume% or less, and even more preferably 20 volume% or more and 60 volume% or less.

Matrix resin 120 may be of any type as long as the matrix resin is a thermoplastic resin (first thermoplastic resin). The first thermoplastic resin may be a crystalline resin or a non-crystalline resin. The thermoplastic resin may be any thermoplastic resin derived from fossil fuels or from biomass raw materials, or a mixture thereof.

Examples of the first thermoplastic resin include polyolefin resins such as polyethylene, polypropylene, polybutene, and poly(4-methyl-1-pentene), polyamide resin, polyester resin, polystyrene resin, thermoplastic polyimide resin, polyamideimide resin, polycarbonate resin, polyphenylene ether resin, polyphenylene sulfide resin, polyacetal resin, acrylic resin, polyetherimide resin, polysulfone resin, polyetherketone resin, polyetheretherketone resin, polyarylate resin, polyethernitrile resin, vinyl chloride resin, ABS resin, and fluororesin.

In particular, a polyamide resin and a polyolefin resin are preferred. From the viewpoint of enabling of forming at a lower temperature and further increasing production efficiency, a polyolefin resin is more preferred, and from the viewpoints of reducing the weight, increasing rigidity, reducing water absorption, and further increasing chemical resistance and chemical stability, polypropylene is even more preferred.

Matrix resin 120 may be a resin composition containing at least one additive. Examples of the additive include known fillers (inorganic fillers and organic fillers), pigments, dyes, weather-resistant stabilizers, heat-resistant stabilizers, antistatic agents, anti-slip agents, antioxidants, anti-mold agents, antibacterial agents, flame retardants, and softeners.

In addition, matrix resin 120 may contain at least one additional component such as a resin other than the above-described resin and short fibers having a length shorter than that of the above-described reinforcing fibers.

The content of matrix resin 120 based on the total mass of chopped sheet 100 is preferably 20 mass% or more and 80 mass% or less, more preferably 25 mass% or more and 70 mass% or less, even more preferably 35 mass% or more and 70 mass% or less, and particularly preferably 40 mass% or more and 65 mass% or less.

Chopped sheet 100 may be a single-layer thin piece, or may be a laminate of a plurality of aligned fiber layers having orientation directions different to each other-the orientation direction is a direction in which reinforcing fibers 110 are oriented in each layer. When chopped sheet 100 is a laminate, the number of aligned fiber layers (number of stacked layers) included in one chopped sheet 100 is preferably 2 or more and 5 or less, more preferably 2 or more and 3 or less, and even more preferably 2, from the viewpoint that unevenness during forming of the random sheet is less likely to occur. In addition, when chopped sheets 100 are laminates, the average value of the number of laminated layers for all of the spread chopped sheets is preferably 1.25 or more and 5.0 or less, more preferably 1.5 or more and 4.0 or less, and even more preferably 1.75 or more and 2.5 or less. From the viewpoint of further increasing the randomness of the orientation direction of reinforcing fibers in the random sheet, the plurality of aligned fiber layers preferably has the following configuration: the angle between the orientation direction of the reinforcing fibers in one aligned fiber layer and the orientation direction of the reinforcing fibers in another aligned fiber layer is 180°/n $\pm$10° (n is the number of aligned fiber layers).

Chopped sheet 100 preferably has a length (L) in the orientation direction of reinforcing fibers 110 of 1 mm or more and 80 mm or less, more preferably of 3 mm or more and 60 mm or less, and even more preferably of 5 mm or more and 50 mm or less. Setting the length (L) of chopped sheet 100 to fall within the above range can further increase the flexural modulus of the random sheet and allow the appearance of the random sheet to become more similar to marble. When chopped sheet 100 is a laminate of more than one layers having orientation directions of reinforcing fibers different to each other, the length (L) of chopped sheet 100 is defined as the length in the orientation direction of reinforcing fibers 110 measured for one layer which is determined to have the largest length (L). The length direction of chopped sheet 100 is defined as the direction in which reinforcing fibers 110 are oriented, and the length of chopped sheet 100 is defined as the maximum distance in the length direction between both ends of the chopped sheet.

Chopped sheet 100 preferably has a width (W) in a direction orthogonal to the length direction of 1 mm or more and 50 mm or less, more preferably of 3 mm or more and 30 mm or less, and even more preferably of 5 mm or more and 20 mm or less. Setting the width (W) of chopped sheet 100 to fall within the above range can further increase the flexural modulus of the random sheet and allow the appearance of the random sheet to become more similar to marble.

**In** addition, chopped sheet 100 preferably has an aspect ratio (L/W), which is the ratio of length (L) to width (W), of 0.1 or more and 10.0 or less, more preferably of 0.3 or more and 8.0 or less, and even more preferably of 0.5 or more and 6.0 or less. Setting the aspect ratio (L/W) of chopped sheet 100 to fall within the above range can further increase the flexural modulus of the random sheet and allow the appearance of the random sheet to become more similar to marble.

Chopped sheet 100 preferably has a thickness of 0.1 mm or more and 1.0 mm or less, more preferably of 0.2 mm or more and 0.5 mm or less. Setting the thickness to 0.1 mm or more can further increase the productivity of the random sheet. Setting the thickness to 1.0 mm or less allows unevenness to be less likely to occur during forming of the random sheet.

Chopped sheet 100 may have any planar shape, for example, a shape of one of the following: quadrangles such as square, rectangle, parallelogram, and trapezoid, triangles such as equilateral triangle, other polygons, circles and ellipses, and any other diagrams.

1-2. Spreading

**In** the present step, chopped sheets 100 are spread so as to form a flat shape. For example, chopped sheets 100 may be spread without gaps inside a mold frame for press molding, or the like.

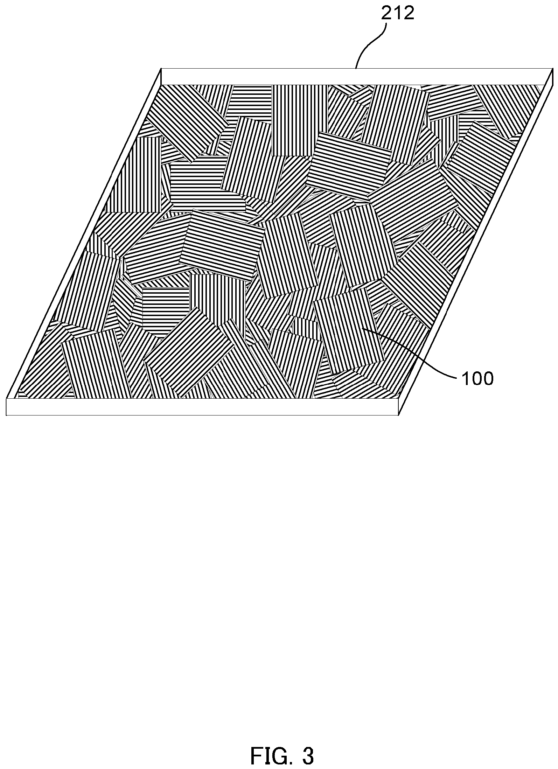

FIG. 3 schematically illustrates chopped sheets 100 being spread inside mold frame 212 in the present step. As illustrated in FIG. 3, chopped sheets 100 are randomly scattered inside mold frame 212 without gaps in the present step. At this time, it is preferable to spread chopped sheets 100 in such a way that chopped sheets 100 overlap one another to form a plurality of layers with no gap being formed. **In** addition, at this time, chopped sheets 100 are preferably spread so that the orientation becomes random (orientation of reinforcing fibers included in each chopped sheet 100) in such a way that the orientation directions of the reinforcing fibers of chopped sheets 100 are not in the same direction. For example, the following are possible: the orientations of chopped sheets 100 are adjusted manually, or chopped sheets 100 are shaken in advance so as to have different orientations to each other and then scattered inside the mold frame.

The planar shape and thickness of the spread chopped sheets 100 may be determined according to the shape of the random sheet to be formed.

2. Step of applying powder (step S120)

Next, thermoplastic resin powder is applied to the above-described spread chopped sheets 100.

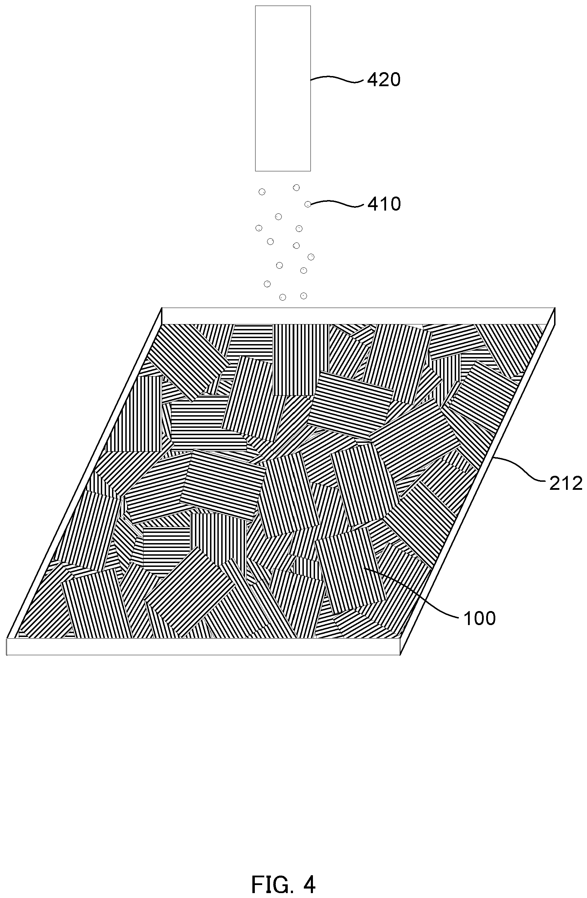

FIG. 4 schematically illustrates application of powder 410 of a thermoplastic resin to the chopped sheets spread inside mold frame 212, in the present step. Powder 410 may be applied by any method, and powder 410 may be applied from sprinkler 420 as illustrated in FIG. 4, or may be applied manually.

When chopped sheets 100 are heated in the next step, powder 410 applied in the present step melts and flows so as to enter the space between chopped sheets 100. Due to the above-described flow, reinforcing fibers 110 are moved so as to be drifted from matrix resin 120, which is also melted, of chopped sheet 100. As a result, it can be presumed that a marble-like appearance with irregularly placed streamlined patterns, which is different from the shape of the original chopped sheet 100, is obtained. Powder 410 enters the space between chopped sheets 100 more easily than a resin film. Therefore, it can be presumed that the molten powder 410 is more likely to enter the space between chopped sheets 100 before matrix resin 120 melts and flows, thereby causing the movement of reinforcing fibers 110 more effectively to allow the appearance of the random sheet to become more similar to marble.

The thermoplastic resin (second thermoplastic resin) constituting the powder may be of any type. The second thermoplastic resin may be a crystalline resin or a non-crystalline resin.

Examples of the second thermoplastic resin include polyolefin resins such as polyethylene, polypropylene, polybutene, and poly(4-methyl-1-pentene), polyamide resin, polyester resin, polystyrene resin, thermoplastic polyimide resin, polyamideimide resin, polycarbonate resin, polyphenylene ether resin, polyphenylene sulfide resin, polyacetal resin, acrylic resin, polyetherimide resin, polysulfone resin, polyetherketone resin, polyetheretherketone resin, polyarylate resin, polyethernitrile resin, vinyl chloride resin, ABS resin, and fluororesin.

**In** particular, the second thermoplastic resin is preferably a polyolefin resin, and more preferably polypropylene, from the viewpoint of improving fluidity during melting. Herein, a polyolefin resin is defined as a resin in which the proportion of the constituent unit derived from $\alpha$-olefin is 50 mol% or more when the total amount of structural units derived from all monomers is 100 mol%, and polypropylene is defined as a resin in which the proportion of the constituent unit derived from propylene is 50 mol% or more when the total amount of constituent units derived from all monomers is 100 mol%. Substantially the same definition can be applied to the other resins.

**In** addition, from the viewpoint of allowing the appearance of the random sheet to become more similar to marble, the second thermoplastic resin preferably has a melting point in a range such that the absolute value of the difference between the melting points of the first thermoplastic resin and the second thermoplastic resin becomes 0°C or more and 30°C or less, more preferably in a range such that the absolute value becomes 0°C or more and 15°C or less, and even more preferably in a range such that the absolute value becomes 0°C or more and 10°C or less. In addition, from the viewpoint of allowing the appearance of the random sheet to become more similar to marble, the melting point of the second thermoplastic resin is preferably set in such a way that the absolute value of the difference between the melting points falls within a predetermined range and is preferably equal to or lower than the melting point of the first thermoplastic resin.

When the difference between the melting points of the first thermoplastic resin and the second thermoplastic resin falls within a range that is not so wide, the melting of matrix resin 120 of chopped sheet 100 and the melting and flowing of powder 410 can occur almost simultaneously when heating and pressurizing are performed in the next step. Therefore, the appearance change due to the flow of powder 410 can be more effectively caused. In addition, when the difference between the melting points falls within a range that is not so wide, thermal decomposition of one of the resins can be prevented or reduced when the heating temperature is increased to melt the other resin having a higher melting point.

In addition, the second thermoplastic resin is preferably compatible with the first thermoplastic resin from the viewpoint of preventing or reducing the generation of whitened areas which would be caused by poor mixing of the resins. Herein, "compatible" means that a single phase is formed when both resins are heated above the melting points thereof and mixed, and then cooled to 25°C. Furthermore, it is more preferable that both resins are identical with each other. Herein, "identical" means that both resins have the same monomer composition, the same weight average molecular weight (Mw) in terms of polystyrene, and the same molecular weight distribution (Mw/Mn), within the range of measurement error.

For example, both the first thermoplastic resin and the second thermoplastic resin are preferably polyolefin resins, and more preferably that both are polypropylene, from the viewpoints of improving visibility of marble-like appearance formed by a plurality of fibers, and reducing water absorption to improve dimensional stability.

From the viewpoint of causing the movement of reinforcing fibers 110 due to the flow of powder 410 more effectively, the second thermoplastic resin preferably has an increased melt flow rate (MFR). For example, when second thermoplastic resin is polypropylene, the MFR of the polypropylene measured in accordance with ASTM D-1238 at 230°C and a load of 2160 g is preferably 5.0 g/10 min or more, more preferably 30.0 g/10 min or more, and even more preferably 100.0 g/10min or more. The upper limit of the MFR of polypropylene is not limited, but the MFR may be 3000.0 g/10 min or less, and preferably 2000.0 g/10 min or less. For example, polypropylene having been synthesized and having a low MFR (or purchased commercially available polypropylene) is heated to cause thermal decomposition to an appropriate degree, thereby increasing the MFR of the heated polypropylene to fall within the above range .

On one hand, the smaller the powder 410 is, the easier it is to enter the space between chopped sheets 100 during heating, thereby more effectively causing the movement of reinforcing fibers 110 due to the flow of powder 410. In addition, the smaller the powder 410 is, the easier it is to be uniformly sprinkled over chopped sheets 100. From the above viewpoint, powder 410 preferably has a median diameter (D50), at which the cumulative amount of particles based on mass is 50% in the particle size distribution, of 700 $\mu$m or less, more preferably of 600 $\mu$m or less, and even more preferably of 500 $\mu$m or less. From the same viewpoint, powder 410 preferably has a particle diameter (D90), at which the cumulative amount of particles based on mass is 90%, of 1,400 $\mu$m or less, more preferably of 1,500 $\mu$m or less, and even more preferably of 1,000 $\mu$m or less.

On the other hand, the larger the powder 410 is, the easier it is to move reinforcing fibers 110 during flow, thereby more effectively causing the appearance change. In addition, the larger the powder 410 is, the less likely it is to fly around during sprinkling, and the easier it is to be uniformly sprinkled. From the above viewpoint, powder 410 preferably has a median diameter (D50), at which the cumulative amount of particles based on mass is 50% in the particle size distribution, of 50 $\mu$m or more, more preferably of 80 $\mu$m or more, and even more preferably of 100 $\mu$m or more. From the same viewpoint, powder 410 preferably has a particle diameter (D10), at which the cumulative amount of particles based on mass is 10%, of 40 $\mu$m or more, more preferably of 50 $\mu$m or more.

The amount of powder 410 applied is not limited, but is preferably 20.0 g/m$^2$ or more, more preferably 40.0 g/m$^2$ or

more, and even more preferably 100.0 g/m$^2$ or more, from the viewpoint of more effectively causing the appearance change due to the flow. The upper limit of the amount of powder 410 applied is not limited, but may be set to 1000.0 g/m$^2$ or less, preferably to 500.0 g/m$^2$ or less, and more preferably to 300.0 g/m$^2$ or less, from the viewpoint of preventing or reducing the occurrence of warping due to an excessive amount of resin.

3. Step of integrating (step S130)

Next, the above-described chopped sheets 100 spread and subjected to the application of powder 410 are heated and pressurized to integrate chopped sheets 100 to each other. As a result, a random sheet in which reinforcing fibers 110 are randomly oriented is obtained.

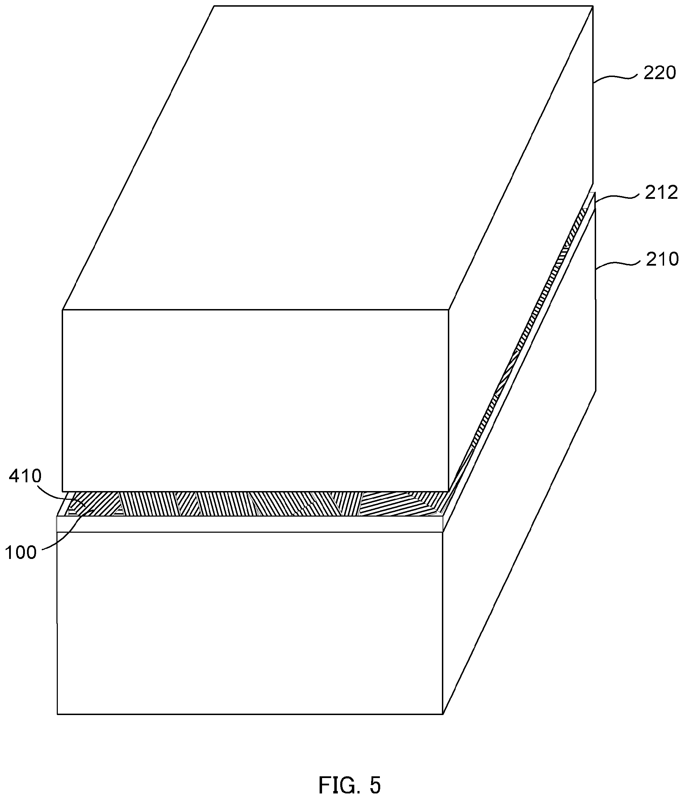

FIG. 5 schematically illustrates heating and pressurizing of chopped sheets 100 in the present step. As illustrated in FIG. 5, pressure is applied to lower mold 210 holding mold frame 212 and to upper mold 220 in the press molding machine while heating the molds, thus chopped sheets 100 spread inside the mold frame 212 can be fused together and integrated.

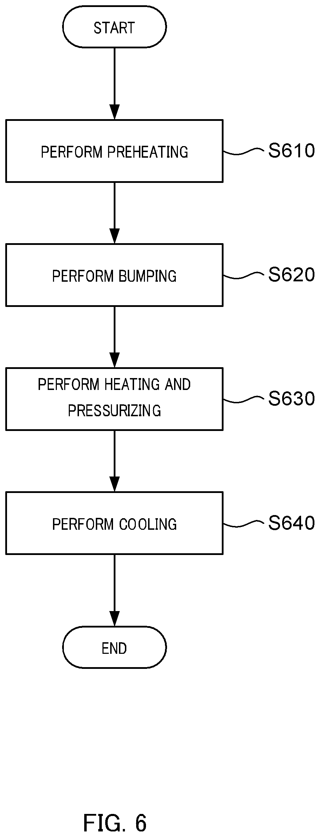

FIG. 6 is a flowchart illustrating an exemplary flow of the present step. As illustrated in FIG. 6, the integration of the thin pieces in the present step may include the following steps: preheating the spread chopped sheet 100 and powder 410 (step S610), bumping chopped sheets 100 (step S620), heating and pressurizing chopped sheets 100 (step S630), and cooling the heated and pressurized chopped sheets 100 (step S640). Although in FIG. 6, bumping (step S620) is performed after preheating (step S610), the order of the steps is not limited, and bumping (step S620) may be performed before preheating (step S610). In addition, it is not necessary to perform preheating (step S610) and/or bumping (step S620).

3-1. Preheating step (step S610)

In the present step, the spread chopped sheets 100 and powder 410 are preheated. By virtue of the preheating, bumping and integration performed later can be performed more effectively in a shorter time.

Preheating conditions are not limited. From the viewpoint of more effectively performing bumping and integration, the preheating temperature is preferably higher than the melting point of one of the first thermoplastic resin and the second thermoplastic resin, the one having a higher melting point. On the other hand, the preheating temperature is preferably set to a temperature at which decomposition of the resin is less likely to occur. For example, the preheating temperature is preferably higher than the melting point of the thermoplastic resin having a higher melting point by a degree of 1°C or more and 80°C or less, more preferably 3°C or more and 70°C or less, and even more preferably 5°C or more and 60°C or less.

In a similar manner, the duration of preheating may be set to a condition that allows for more effective bumping and integration and is less likely to cause decomposition of the resin. For example, the duration of preheating is preferably 2 minutes or more and 20 minutes or less, more preferably 4 minutes or more and 20 minutes or less, and even more preferably 6 minutes or more and 20 minutes or less.

Chopped sheets 100 and powder 410 may be pressurized during the preheating; however, it is not necessary to integrate chopped sheets 100 with each other in the present step, so pressurization is not always necessary. For example, the pressure during the preheating is preferably 0 MPa or more and 1 MPa or less, more preferably 0 MPa or more and 0.7 MPa or less, and even more preferably 0 MPa or more and 0.5 MPa or less.

3-2. Bumping step (step S620)

In the present step, pressurization and depressurization in a short period of time are repeatedly applied to the spread chopped sheets 100. In the present step, removing the air between chopped sheets 100 can prevent or reduce the generation of whitened areas that would be caused by the remaining air. Such a whitened area is more likely to be generated due to the application of powder 410, and the frequency of the generation tends to increase as the amount of powder 410 applied is increased. Therefore, from the viewpoint of preventing or reducing the generation of whitened areas, the bumping step is preferably included.

Bumping conditions are not limited. From the viewpoint of efficiently preventing or reducing the generation of whitened areas, the pressure during pressurization is preferably 0.5 MPa or more and 20 MPa or less, more preferably 1 MPa or more and 20 MPa, and even more preferably 3 MPa or more and 20 MPa. The pressure during depressurization may be atmospheric pressure, but may be 1/5 or less of the pressure during the pressurization.

The time required for one cycle of one pressurization and one depressurization may be determined depending on the air removal efficiency, but for example, the time is preferably 0.1 seconds or more and 20 seconds or less, more preferably 0.1 seconds or more and 10 seconds or less, and even more preferably 0.1 seconds or more and 7 seconds or less. In addition, the number of cycles in the present step may also be determined depending on the air removal efficiency, but for example, the number is preferably 1 or more and 20 or less, more preferably 3 or more and 20 or less, and even more preferably 5 or more and 20 or less.

3-3. Heating and pressurizing step (step S630)

In the present step, chopped sheets 100 spread inside mold frame 212 are integrated with each other by heating and pressurizing chopped sheets 100 and powder 410. In the present step, during the integration of chopped sheets 100, reinforcing fibers 110 are caused to move due to the flow of powder 410 as described above, thereby obtaining a molded article with marble-like appearance.

The heating temperature is set to be higher than the melting point of one of the first thermoplastic resin and the second thermoplastic resin, the one having a higher melting point (that is, the heating temperature is equal to or higher than the melting point of the first thermoplastic resin and equal to or higher than the melting point of the second thermoplastic resin). On the other hand, the heating temperature is preferably set to a temperature at which decomposition of the resin is less likely to occur. For example, the heating temperature is preferably higher than the melting point of the thermoplastic resin having a higher melting point by a degree of 0°C or more and 80°C or less, more preferably 3°C or more and 70°C or less, and even more preferably 5°C or more and 60°C or less. The pressure during the pressurizing is preferably 0.5 MPa or more and 20 MPa or less, more preferably 1 MPa or more and 20 MPa or less, and even more preferably 3 MPa or more and 20 MPa or less.

The duration of the heating and pressurization may be set so that chopped sheets 100 are satisfactorily integrated, and for example, the duration is preferably 30 seconds or more and 20 minutes or less, more preferably 50 seconds or more and 20 minutes or less, even more preferably 1 minute or more and 20 minutes or less.

The method of heating and pressurizing is not limited to the press molding method using a press molding machine. Examples of other heating and pressurizing methods include a press molding method using a double belt press machine and an autoclave method using an autoclave device.

3-4. Cooling step (step S640)

In the present step, chopped sheets 100 integrated with each other by the heating and pressurization described above are cooled. From the viewpoint of preventing or reducing the generation of whitened areas which would be caused by thermal contraction of the first thermoplastic resin and the second thermoplastic resin, it is preferable to cool chopped sheets 100 while pressurizing chopped sheets 100 in the present step. The effect obtained by the above pressurization-the effect of preventing or reducing the generation of whitened areas-tends to be more pronounced as the amount of the second thermoplastic resin applied is increased. The temperature during cooling is preferably 5°C or more and 90°C or less, more preferably 5°C or more and 70°C or less. The pressure during this pressurizing is preferably 0.5 MPa or more and 20 MPa or less, more preferably 1 MPa or more and 20 MPa or less, and even more preferably 3 MPa or more and 20 MPa or less.

The integrated chopped sheets are then satisfactorily cooled and taken out, thereby obtaining a random sheet. In the obtained random sheet, the orientation direction of reinforcing fibers 110 originating from each chopped sheet is changed randomly, and thus, the obtained random sheet has an appearance more similar to marble than conventional random sheets.

4. Other embodiments

It should be noted that the above-described embodiment shows an example of the present invention, and the present invention is not limited to the above-described embodiment, and various other embodiments are possible within the scope of the idea of the present invention.

For example, the following is possible: after the powder is applied to a limited area, the chopped sheets are spread over the powder, and then the chopped sheets are integrated with each other by heating and pressurizing. It is thus also possible to prepare a random sheet with different degrees of marble-like appearance. At this time, the following is possible: after spreading powder in the frame, chopped sheets are spread on top of the powder, and powder is further sprinkled from above. By changing the amount of powder sprinkled between the front and back sides, it is possible to prepare a sheet with different degrees of marble-like appearance.

In addition, a coloring agent such as a pigment or a dye may be added to the matrix resin of the chopped sheet and/or the powder to be applied. It is thus also possible to prepare random sheets having a wide variety of color tones.

5. Applications

Random sheets produced by the above method may be used for any application. Such a random sheet is very useful in applications for articles that are lightweight and require relatively high strength, such as electrical parts, PC cases, mobile phone covers, automobile parts, motorcycle parts, furniture, partitions, screen walls, doors, and sliding doors. Such a random sheet is also very useful in applications for articles that require good design, such as building materials, for example, wallpaper, flooring, and decorative boards.

Examples

The present invention will be described in detail based on Examples; however, the present invention is not limited to these Examples.

1. Preparation of random sheet

1-1. Provision of materials

1-1-1. Chopped sheet 1

A UD sheet (TAFNEX, manufactured by Mitsui Chemicals, Inc. ("TAFNEX" is a registered trademark of the company)) was cut with a tape cutter (H510, manufactured by Hashima Co., Ltd.), thereby obtaining chopped sheets 1 each having a size of 13 mm in length in the direction in which fibers are oriented and 12.5 mm in width in the direction orthogonal to the length direction. This UD sheet was a UD sheet containing polypropylene and carbon fibers, and had a fiber volume fraction (Vf) of 50 volume% and a thickness of 160 μm.

1-1-2. Chopped sheet 2

A UD sheet (MCP1223, manufactured by Maruhachi Corporation) was cut with the tape cutter (H510, manufactured by Hashima Co., Ltd.), thereby obtaining chopped sheets 2 each having a size of 13 mm in length in the direction in which fibers are oriented and 12.5 mm in width in the direction orthogonal to the length direction. This UD sheet was a UD sheet containing polyamide 6 and carbon fibers, and had a fiber volume fraction (Vf) of 52 volume% and a thickness of 170 μm.

1-1-3. Thermoplastic resin powder 1

Here, 0.1% by weight of peroxide (Perbutyl P-40, manufactured by NOF Corporation) was added to polypropylene (Prime Polypro J108M, manufactured by Prime Polymer Co., Ltd.), and the mixture was thermally decomposed at 240°C to obtain a PP pyrolysis product. The PP pyrolysis product has a melting point of 168°C measured by the DSC method in accordance with JIS K 7121 and a melt flow rate (MFR) of 200.0 g/10 min measured at 230°C and a load of 2,160 g in accordance with ASTM D-1238.
The PP pyrolysis product was frozen to -90°C with liquid nitrogen, and then pulverized by using a pulverizer, 6875D Freezer Mill (manufactured by SPEX). Thereafter, the pulverized product was allowed to pass through a sieve with an opening of 1,400 μm to remove portions that have not been pulverized, thereby obtaining Powder 1. The particle diameter of Powder 1 was measured by using a dry sieving device, Air Jet Sieve e200LS (manufactured by Hosokawa Micron Corporation). Regarding the particle diameters of Powder 1, D50 based on mass was 190 μm, D90 based on mass was 458 μm, and D10 based on mass was 68 μm.

1-1-4. Thermoplastic resin powder 2

Polypropylene (Prime Polypro J106G, manufactured by Prime Polymer Co., Ltd.) was powdered in the same manner as Powder 1 to obtain thermoplastic resin Powder 2. The melting point, melt flow rate (MFR), and particle diameters based on mass were measured in the same manner as Powder 1. This polypropylene had a melting point of 168°C and a melt flow rate (MFR) of 15 g/10 min. Regarding the particle diameters of Powder 2, D50 based on mass was 245 μm, D90 based on mass was 475 μm, and D10 based on mass was 87 μm.

1-1-5. Thermoplastic resin powder 3

Polyamide 6 (Amilan CM1046, melting point announced by the manufacturer: 225°C, manufactured by Toray Industries, Inc.) was frozen to -90°C with liquid nitrogen, and then pulverized by using the pulverizer, 6875D Freezer Mill (manufactured by SPEX). Thereafter, the pulverized product was allowed to pass through a sieve with an opening of 1,400 μm to remove portions that have not been pulverized, thereby obtaining Powder 3. The particle diameter of powder 3 was measured by using the dry sieving device (Air Jet Sieve e200LS, manufactured by Hosokawa Micron Corporation) to find that D50 based on mass was 270 $\mu$m, D90 based on mass was 491 $\mu$m, and D10 based on mass was 71 $\mu$m.

1-1-6. Thermoplastic resin film 1

The above PP pyrolysis product was heated and pressurized for 10 minutes at 170°C and under the pressure of 10 MPa by using a press machine to obtain thermoplastic resin film 1 having a thickness of 55 $\mu$m.

1-1-7. Thermoplastic resin film 2

Polyamide 6 (Amilan CM1046, melting point announced by the manufacturer: 225°C, manufactured by Toray Industries, Inc.) was heated and pressurized for 5 minutes at 240°C and under the pressure of 10 MPa by using the press machine to obtain thermoplastic resin film 2 having a thickness of 100 $\mu$m.

1-1-8. Thermoplastic resin film 3

Terephthalic acid 2,774g (16.7 mol), isophthalic acid 1,196g (7.2 mol), 1,6-diaminohexane 2,800g (24.1 mol), benzoic acid 36.6g (0.3 mol), sodium hypophosphite monohydrate 5.7 g ($5.4 \times 10^{-2}$ mol) and 545 g of distilled water were placed in an autoclave having an internal capacity of 1 L, and purging with nitrogen was performed. Stirring was started from 190°C, and the internal temperature of the autoclave was increased to 250°C over 3 hours. At this time, the internal pressure of the autoclave was increased to 3.0 MPa. After the reaction was continued for 1 hour, the autoclave was vented to the atmosphere through a spray nozzle installed at the bottom thereof, and a low condensate was extracted. Subsequently, the extracted low condensate was cooled to room temperature (23°C), and then was pulverized with a pulverizer until the condensate has a particle size of 1.5 mm or less and dried at 110°C for 24 hours. The water content of the obtained low condensate was 4,100 ppm, the intrinsic viscosity [$\eta$] of the obtained low condensate was 0.15 dl/g. Next, this low condensate was placed in a solid phase polymerization apparatus with shelves, and after purging with nitrogen, the temperature was increased to 180°C over about 1 hour and 30 minutes. Subsequently, after the reaction was continued for 1 hour and 30 minutes, the temperature was lowered to room temperature (23°C). The resultant was then melt-polymerized in a twin-screw extruder with a screw diameter of 30 mm and L/D of 36 under the conditions of a barrel setting temperature of 330°C, a screw rotation speed of 200 rpm, and a resin feed rate of 10 kg/h, thereby obtaining polyamide resin (PA6T6I).

The obtained polyamide resin had an intrinsic viscosity [$\eta$] of 1.0 dl/g, a melting point Tm of 330°C, and a heat of fusion ($\Delta$H) of 51 J/g.

The intrinsic viscosity [$\eta$] of the polyamide resin was obtained as follows: 0.5 g of the polyamide resin is dissolved in 50 ml of 96.5% sulfuric acid solution to prepare a solution; the falling time of the solution was measured by using an Ubbelohde viscometer under the condition of $25 \pm 0.05$°C, and the intrinsic viscosity was calculated based on the equation "[$\eta$] = $\eta$SP/(C(1 + 0.205$\eta$SP))."

[$\eta$]: Intrinsic viscosity (dl/g)
$\eta$SP: Specific viscosity
C: Sample concentration (g/dl)
t: Falling time of sample solution (seconds)
t0: Falling time of blank sulfuric acid (seconds)

$$\eta SP = (t - t0)/t0$$

The melting point (Tm) and heat of fusion ($\Delta$H) of the polyamide resin were measured by using a differential scanning calorimeter (DSC220C, manufactured by Seiko Instruments Inc.). Specifically, about 5 mg of a polyamide resin was sealed in an aluminum pan for measurement, placed in the differential scanning calorimeter, and heated from room temperature to 350°C at the rate of 10°C/min. For completely melting the resin, the resin was held at 360°C for 3 minutes and then cooled to 30°C at the rate of 10°C/min. After allowed to stand at 30°C for 5 minutes, the resin was heated a second time to 360°C at the rate of 10°C/min. The endothermic peak temperature (°C) in this second heating was used as the melting point (Tm) of the polyamide resin. The heat of fusion $\Delta$H was determined from the area of the endothermic peak of crystallization during the first temperature raising process according to JIS K7122.

The polyamide resin described above was heated and pressurized for 5 minutes at 340°C and under the pressure of 10 MPa by using the press machine to obtain thermoplastic resin film 3 having a thickness of 80 $\mu$m.

1-1-9. Thermoplastic resin pellet

The above PP pyrolysis product was granulated and pelletized to obtain cylindrical thermoplastic resin pellets each having a length of 4,000 μm and a diameter of 3,000 μm.

1-2. Preparation of random sheet

1-2-1. Preparation of random sheet 1 (Example)

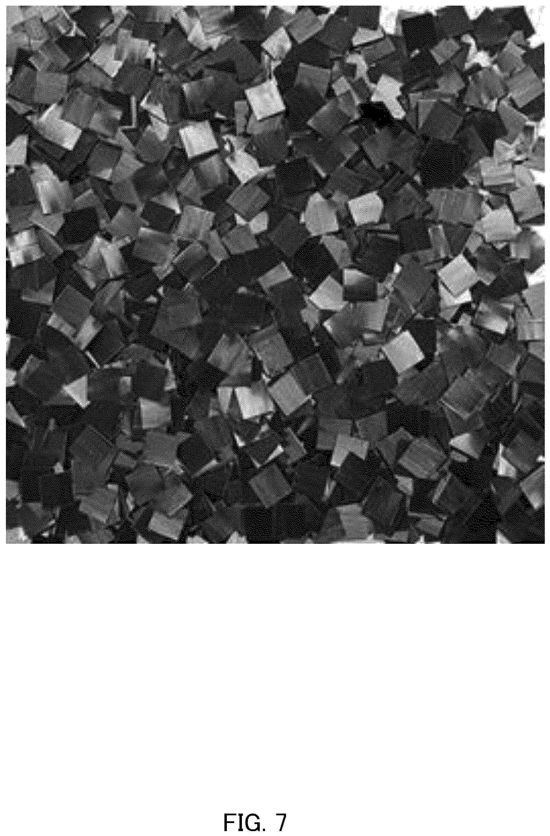

In a mold having a size of 220 mm in length and 220 mm in width, 65 g of the above chopped sheets 1 was spread in such a way that the orientation direction of the fibers became random. Thereafter, 8.8 g of powder 1 was uniformly sprinkled over the spread chopped sheets. FIG. 7 illustrates image data obtained by capturing the image of the appearance of the scattered chopped sheets.

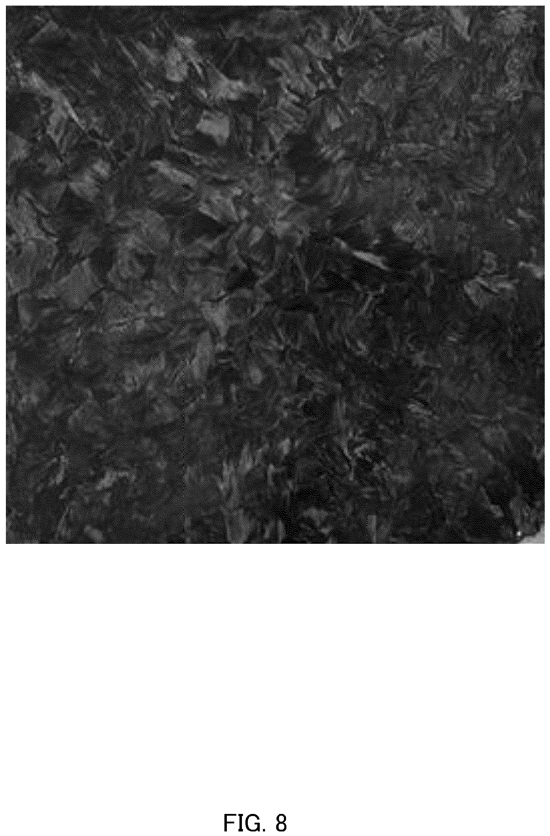

The above mold was placed in a press machine (MINI TEST PRESS, manufactured by Toyo Seiki Seisaku-sho, Ltd), and press molding was performed under the molding conditions below to obtain random sheet 1 having a length of 220 mm, a width of 220 mm, and a thickness of 1.1 mm. FIG. 8 illustrates image data obtained by capturing the image of the appearance of random sheet 1.

- Molding condition -

Preheating: temperature of 175°C, pressure of 0.3MPa, 8 minutes
Bumping: bumping 5 times at temperature of 175°C and under pressure of 10 MPa, then
Maintaining pressurization: temperature of 175°C, pressure of 10MPa, 2 minutes
Cooling: temperature of 15°C, pressure of 10MPa, 3 minutes
Preheating, bumping, maintaining pressurization, and cooling were performed in this order.

1-2-2. Preparation of random sheets 2 to 5 (Examples)

Random sheets 2 to 5 were obtained in the same manner as in the preparation of random sheet 1, except that the amount of powder 1 to be sprinkled was changed.

1-2-3. Preparation of random sheets 6 and 7 (Examples)

Random sheets 6 and 7 were obtained in the same manner as in the preparation of random sheet 1, except that powder 2 was used in place of powder 1 and the amount of the powder to be sprinkled was changed.

1-2-4. Preparation of random sheet 8 (Example)

Random sheet 8 was obtained in the same manner as in the preparation of random sheet 1 except that bumping was not performed.

1-2-5. Preparation of random sheet 9 (Example)

In a mold having a size of 220 mm in length and 220 mm in width, 71 g of the above chopped sheets 2 was spread in such a way that the orientation direction of the fibers became random. Thereafter, 4.0 g of powder 3 was uniformly sprinkled over the spread chopped sheets.

The above mold was placed in the press machine (MINI TEST PRESS, manufactured by Toyo Seiki Seisaku-sho, Ltd), and press molding was performed under the molding conditions below to obtain random sheet 9 having a length of 220 mm, a width of 220 mm, and a thickness of 1.1 mm.

- Molding condition -

Preheating: temperature of 240°C, pressure of 0.3MPa, 8 minutes
Bumping: bumping 5 times at temperature of 240°C and under pressure of 10 MPa, then

Maintaining pressurization: temperature of 240°C, pressure of 10MPa, 2 minutes
Cooling: temperature of 15°C, pressure of 10MPa, 4 minutes
Preheating, bumping, maintaining pressurization, and cooling were performed in this order.

1-2-6. Preparation of random sheet 10 (Comparative example)

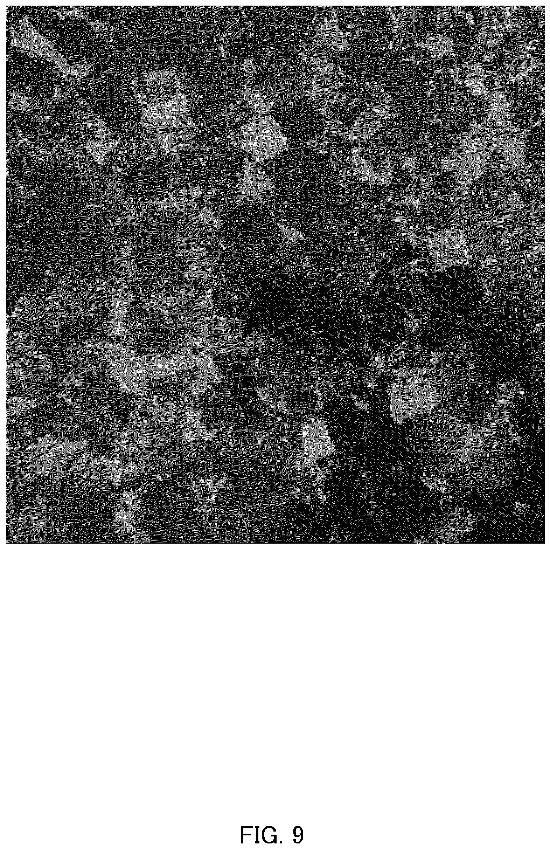

Random sheet 9 was obtained in the same manner as in the preparation of random sheet 1 except that powder 1 was not sprinkled. FIG. 9 illustrates image data obtained by capturing the image of the appearance of random sheet 10.

1-2-7. Preparation of random sheet 11 (Comparative example)

Random sheet 11 was obtained in the same manner as in the preparation of random sheet 1, except that powder 1 was not sprinkled, and instead, film 1 (weight: 2.4 g) having a size of 220 mm in length and 220 mm in width was placed on the chopped sheets.

1-2-8. Preparation of random sheet 12 (Comparative example)

Random sheet 12 was obtained in the same manner as in the preparation of random sheet 1, except that the same amount of the above pellets was scattered in place of powder 1.

1-2-9. Preparation of random sheet 13 (Comparative example)

Random sheet 13 was obtained in the same manner as in the preparation of random sheet 1, except that powder 1 was not sprinkled, and instead, film 2 (weight: 5.1 g) having a size of 220 mm in length and 220 mm in width was placed on the chopped sheets.

1-2-10. Preparation of random sheet 14 (Comparative example)

Random sheet 14 was obtained in the same manner as in the preparation of random sheet 1, except that powder 1 was not sprinkled, and instead, film 3 (weight: 5.1 g) having a size of 220 mm in length and 220 mm in width was placed on the chopped sheets.

1-2-11. Preparation of random sheet 15 (Comparative example)

Random sheet 15 was obtained in the same manner as in the preparation of random sheet 9, except that powder 3 was not sprinkled, and instead, film 2 (weight: 5.1 g) having a size of 220 mm in length and 220 mm in width was placed on the chopped sheets.

1-3. Evaluation

1-3-1. Appearance evaluation of marble-like appearance degree

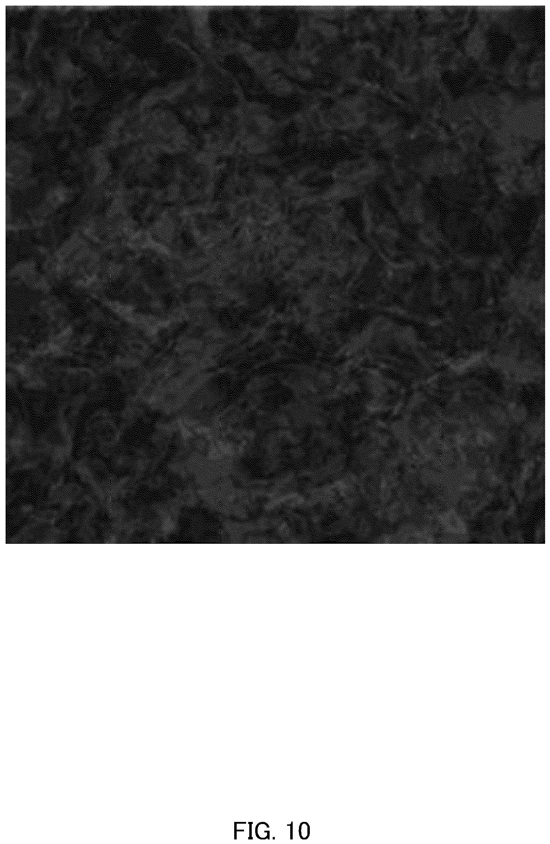

The image data obtained by capturing the image of marble (FIG. 10) is used as the target appearance, and five trained scorers evaluated the appearance of each random sheet with increments of 1 point, giving 10 points for the state in FIG. 10 and 1 point for the state (before pressing) in FIG. 7. The average score of the evaluations by the five scorers was used as the appearance evaluation score of the random sheet.

1-3-2. Appearance evaluation of whitened area

The surface of each random sheet was observed visually, and the whitened areas on the surface of each sheet were evaluated according to the following evaluation criteria.

- Evaluation criteria -

◎: There is no visible whitened area
○: There is one or more visible whitened areas, but all of them are less than 2.0 mm in size

△: There are 1 or more and less than 5 whitened areas with a size of 2.0 mm or more
×: There are 5 or more whitened areas with a size of 2.0 mm or more

Tables 1 and 2 show the type of additive added to the chopped sheets, the resin type, MFR and added amount of the additive, the thickness of the film when it was placed, and the appearance evaluation score. When a polyamide resin is used as the additive, the MFR is not shown in the tables because the standardized evaluation criteria for MFR of polyamide resin are different from those of polypropylene, and comparison under the same conditions is not possible.

Table 1

| | | | | Examples | | | | | | | | |
|---|---|---|---|---|---|---|---|---|---|---|---|---|
| | | | | 1 | 2 | 3 | 4 | 5 | 6 | 7 | 8 | 9 |
| UD sheet | Type | | | 1 | 1 | 1 | 1 | 1 | 1 | 1 | 1 | 2 |
| | Matrix resin | Type | | PP | PP | PP | PP | PP | PP | PP | PP | PA6 |
| Additive | Type | | | Powder 1 | Powder 1 | Powder 1 | Powder 1 | Powder 1 | Powder 2 | Powder 2 | Powder 1 | Powder 3 |
| | Resin type | Type | | PP | PP | PP | PP | PP | PP | PP | PP | PA6 |
| | | MFR | g/10min | 200 | 200 | 200 | 200 | 200 | 15 | 15 | 200 | |
| | Added amount | | g/m² | 181.8 | 90.9 | 68.2 | 45.5 | 22.7 | 206.6 | 90.9 | 181.8 | 82.6 |
| | Film thickness | | μm | - | - | - | - | - | - | - | - | - |
| Production condition | Bumping | | | Yes | Yes | Yes | Yes | Yes | Yes | Yes | No | Yes |
| Appearance | Sensory evaluation score | | | 8.0 | 7.2 | 7.0 | 6.4 | 5.0 | 7.4 | 6.8 | 8.0 | 6.2 |
| | Whitened area | | | ◎ | ◎ | ◎ | ◎ | ◎ | ◎ | ◎ | △ | △ |

Table 2

| | | | Comparative examples | | | | | |
|---|---|---|---|---|---|---|---|---|
| | | | 10 | 11 | 12 | 13 | 14 | 15 |
| UD sheet | Type | | 1 | 1 | 1 | 1 | 1 | 2 |
| | Matrix resin | | PP | PP | PP | PP | PP | PA6 |
| Additive | Type | | None | Film 1 | Pellet 1 | Film 2 | Film 3 | Film 2 |
| | Resin type | | - | PP | PP | PA6 | PA6T6I | PA6 |
| | MFR | g/10min | - | 200 | 200 | - | - | - |
| | Added amount | g/m$^2$ | 0.0 | 49.5 | 181.8 | 105.4 | 105.4 | 105.4 |
| | Film thickness | μm | - | 55 | - | 100 | 80 | 100 |
| Production condition | Bumping | | Yes | Yes | Yes | Yes | Yes | Yes |
| Appearance | Sensory evaluation score | | 3.0 | 4.4 | 3.8 | 3.6 | 1.8 | 4.4 |
| | Whitened area | | ◎ | ◎ | Δ | × | × | × |

As is clear from Table 1, when a random sheet is prepared by applying thermoplastic resin powder to the spread chopped sheets, the appearance of the random sheet becomes more marble-like. It is also clear that performing bumping can further prevent or reduce the generation of whitened area.

This application is entitled to and claims the benefit of Japanese Patent Application No. 2022-057209 filed on March 30, 2022, the disclosure of which including the specification, claims, and drawings as of the filing of the present application is incorporated herein by reference in its entirety.

Industrial Applicability

The random sheets relating to the present invention have better appearance than conventional random sheets. Therefore, the present invention is expected to expand the possibilities of using random sheets in applications that particularly require good design, and to contribute to the development of various fields related to random sheets.

Reference Signs List

100 Chopped sheet
110 Reinforcing fiber
120 Matrix resin
210 Lower mold
212 Mold frame
220 Upper mold
410 Powder
420 Sprinkler

**Claims**

1.   A method for producing a random sheet, the method comprising:

spreading thin pieces of a fiber reinforced resin so as to form a flat shape, wherein in the fiber reinforced resin, a plurality of reinforcing fibers arranged to be oriented in one direction are impregnated with a first thermoplastic resin;
applying powder of a second thermoplastic resin to the thin pieces spread; and
integrating the thin pieces with each other by heating and pressurizing the thin pieces, the thin pieces being subjected to the applying of the powder.

2. The method according to claim 1, wherein
in the applying the powder, the powder is applied in an amount of 20.0 g/m$^2$ or more.

3. The method according to claim 1 or 2, wherein the first thermoplastic resin and the second thermoplastic resin are both polyolefin resins.

4. The method according to any one of claims 1 to 3, wherein the first thermoplastic resin and the second thermoplastic resin are both polypropylene.

5. The method according to any one of claims 1 to 4, wherein the second thermoplastic resin is polypropylene having a melt flow rate (MFR) of 5.0 g/10 min or more measured at 230°C and a load of 2,160 g in accordance with ASTM D-1238.

6. The method according to any one of claims 1 to 5, wherein
the integrating the thin pieces with each other includes, in an order below,

bumping for removing air from a space between the thin pieces spread and the powder, and
heating and pressurizing the thin pieces spread and the powder at a temperature equal to or higher than a melting point of the first thermoplastic resin and equal to or higher than a melting point of the second thermoplastic resin to integrate the thin pieces with each other.

START

SPREAD THIN PIECES — S110

APPLY POWDER — S120

INTEGRATION OF THIN PIECES — S130

END

FIG. 1

100

110

120

FIG. 2

212

100

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/JP2023/012880** |

**A. CLASSIFICATION OF SUBJECT MATTER**

***B29C 43/20***(2006.01)i; ***B29C 70/18***(2006.01)i
FI: B29C43/20; B29C70/18

According to International Patent Classification (IPC) or to both national classification and IPC

**B. FIELDS SEARCHED**

Minimum documentation searched (classification system followed by classification symbols)

B29C43/20; B29C70/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-43878 A (OJI HOLDINGS CORP) 02 March 2017 (2017-03-02) paragraphs [0020], [0034], [0045], [0074] | 1-5 |
| A | all pages, all drawings | 6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 May 2023** | **06 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2023/012880** |

| Patent document cited in search report | Publication date (day/month/year) | Patent family member(s) | Publication date (day/month/year) |
|---|---|---|---|
| JP 2017-43878 A | 02 March 2017 | (Family: none) | |

Form PCT/ISA/210 (patent family annex) (January 2015)

**EP 4 501 576 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020009125 A
- JP 2022057209 A